# EUROPÄISCHE PATENTSCHRIFT

(11) **EP 0 472 075 B1**
(45) Veröffentlichungstag und Bekanntmachung des Hinweises auf die Patenterteilung: **17.01.1996**
(21) Anmeldenummer: 91113463.3
(22) Anmeldetag: 12.08.1991
(51) Int. Cl.: C08B 11/15, C08B 11/20, C08B 11/193, D21H 17/26

(54) **Verfahren zur Herstellung von Polysacchariden**
Process for the preparation of polysaccharides
Procédé de préparation de polysaccharides

(30) Priorität: 23.08.1990 DE 4026617
(43) Veröffentlichungstag der Anmeldung: 26.02.1992
(73) Patentinhaber: Wolff Walsrode Aktiengesellschaft, D-29655 Walsrode (DE)
(72) Erfinder: Buysch, Hans-Josef, Dr., W-4150 Krefeld (DE); Szablikowski, Klaus, Dr., W-3030 Walsrode (DE); Breckwoldt, Jörn, Dr., W-2720 Rothenburg (DE)
(74) Vertreter: Braun, Rolf, Dr.

(56) Entgegenhaltungen:
- DE-A- 3 820 031
- GB-A- 2 219 587
- US-A- 3 567 360

## Beschreibung

Die vorliegende Erfindung betrifft ein Verfahren zur Herstellung von kationischen Polysacchariden.

Kationische Polysaccharide sind begehrt als Hilfsmittel für die Papierfabrikation, Ausgangsprodukte für die Herstellung hochaktiver Filtermaterialien, die im medizinischen Bereich und in der Nahrungsmittelindustrie Verwendung finden und auch als Zusatze zu hygienischen und kosmetischen Reinigungs- und Pflegemitteln. Basische Polysaccharide dienen u.a. als Ionenaustauscher (US-A-4 199 485) zur Herstellung säurelöslicher Polysaccharide (US-A-2 623 041) und als Ausgangsprodukte für die Synthese kationischer Polysaccharide (vgl. US-A-2 768 162). Ihre Wirksamkeit ist in der Regel um so größer, je mehr kationische Gruppen sie enthalten.

Es ist also wünschenswert, Polysaccharide in einem mehr oder weniger hohen Grad entsprechend den jeweiligen Anforderungen substituieren zu können.

Man hat schon früh Cellulosesulfonate mit Aminen umgesetzt, um dadurch zu N-haltigen Cellulosen zu gelangen. Die erhaltenen Substitutionsgrade waren jedoch unzureichend (z.B. 0,8 Gew.-% N; vgl. Angew. Chem. 39, 1509 bis 36 (1926)) und die Ausbeuten gering (vgl. J. Amer. Chem. Soc. 63, 1688 bis 1691).

Nach einer Alkylierung zwecks Kationisierung ist immer ein aufwendiger Reinigungs- und Umfällprozeß erforderlich, um die kationisierte Cellulose von den kationischen Polyethern zu trennen (siehe Beispiele 1 bis 3 der US-A 3 472 840).

Aus der DE-PS 3 820 031 ist ein Verfahren zur Herstellung von Derivaten der CMC mit quaternärem Ammonium bekannt. Das Verfahren ist dadurch gekennzeichnet, daß man
a) ein Alkalisalz der Carboxymethylcellulose mit Alkylhalogeniden, speziell Methylchlorid, zum Ester der Carboxymethylcellulose umsetzt,
b) den erhaltenen Ester der Carboxymethylcellulose mit Aminen der allgemeinen Formel 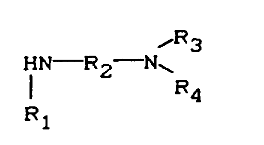
c) und schließlich die Quaternisierung der Aminoamidocellulosen mit allgemein bekannten Alkylierungsmitteln versetzt.

Das Verfahren weist jedoch einige gravierende Nachteile auf:
1. Nach dem Verfahren sind nur Celluloseether umsetzbar, die den Carboxymethylsubstituenten tragen (CMC, CMHEC).
2. Das Verfahren ist nicht ökonomisch. Die Dreistufensynthese ist sehr zeitaufwendig (siehe Beispiel 1a: reine Reaktionszeit: 21 h), und es sind in den Verfahren zwei Reinigungsoperationen notwendig.
3. Der Substitutionsgrad an kationischen Gruppen ist nicht frei einstellbar; er ist abhängig von der eingesetzten Carboxymethylcellulose. Eine nur teilweise Überführung der Carboxylatgruppen in quarternäre Ammoniumgruppen ist nicht möglich, da so Produkte entstehen, die sowohl kationische als auch anionische Gruppen tragen, welches bekanntlich zur Bildung von inneren Salzen führt, so daß die Produkte in Wasser unlöslich werden (ionische Vernetzung).
4. Die Veresterung der Carboxymethylcellulose verläuft nicht eindeutig. Das Methylchlorid zersetzt sich unter den genannten Reaktionsbedingungen unter Ausbildung von Methanol und Salzsäure.
   Aufgrund dieser Zersetzung treten im Laufe des Verfahrens eine ganze Reihe von Nebenreaktionen an dem Polymer auf, die letztendlich zu wasserunlöslichen Produkten führt (siehe Vergleichsbeispiel).
5. Aufgrund der Nebenreaktion und der Reaktionsparameter weist das quarternäre Polymer eine wesentlich niedrigere Viskosität als die eingesetzte Carboxymethylcellulose auf (siehe Beispiel 3 des Patentes).

Der Erfindung lag die Aufgabe zugrunde, kationische Polysaccharide mit einer eindeutigen, flexibel einstellbaren Substitution und möglichst hohem Substitutionsgrad herzustellen nach eindeutig verlaufenden Reaktionen mit möglichst preiswerten Reagenzien.

Die vorliegende Erfindung betrifft ein Verfahren zur Herstellung von Polysacchariden der Formel (I) 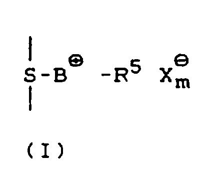 durch Umsetzung von Polysacchariden auf Basis wiederkehrender Einheiten S mit einem Alkylhalogenid der Struktur (II) 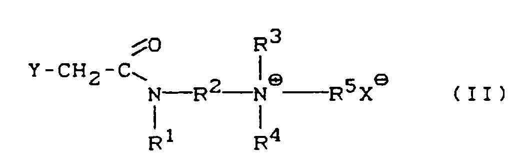 worin bedeuten
- S: eine Monosaccharideinheit und
- B: ein an den Monosaccharidrest S über ein O-Atom gebundener Rest der Formel (Ia) 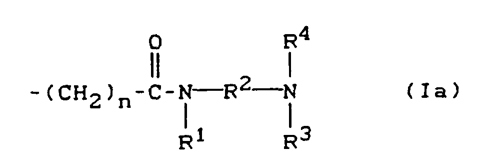
n = eine ganze Zahl von 1 bis 6,
R¹ = H, C₁_₄-Alkyl,
R = ein Alkylenrest, der durch wenigstens ein O-oder N-Atom unterbrochen sein kann,
R³,R⁴ = ein Alkyl-, Aralkyl- oder Arylrest, ein Alkylrest, der durch wenigstens ein Heteroatom unterbrochen sein kann,
m = eine Zahl von 0,05 bis 3,0,
R⁵ = einen gegebenenfalls eine olefinische Doppelbindung oder ein O-Atom enthaltender Alkylrest oder ein Aralkylrest,
Y = Cl, Br,
X ^{⊖} ein Anion
oder

R³ und R⁴ zusammen mit dem gemeinsamen N-Atom einen gegebenenfalls ein weiteres Heteroatom enthaltenen Ring.

In einer bevorzugten Ausführungsform bedeuten
- R¹: H, CH₃,
- R: -CH₂CH₂-, -(CH₂)₃-, -(CH₂)₄-, -(CH₂)₆-, 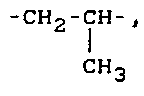 -(CH₂)₃-O-(CH₂)₂-, -(CH₂)₂-O-(CH₂)₂-,
- R³ =: CH₃, C₂H₅, C₃H₇, C₄H₉, 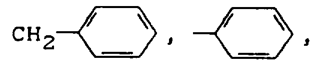
- R⁴: CH₃, CH₂CH₂OH, CH₂CH₃, CH₂-CH₂-O-CH₃ oder
- R³, R⁴: mit dem N-Atom die Gruppe 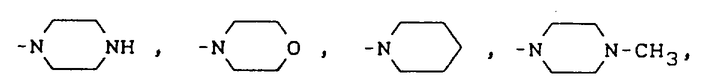
- R⁵: CH₃, CH₂CH₃, CH₂-CH=CH₂, 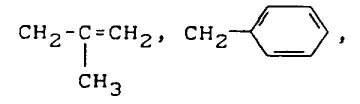 CH₂-CH₂OH
- X^{⊖}: Cl^{⊖}, Br^{⊖}, SO₄Me^{⊖}, SO₄Et^{⊖} Toluolsulfonat, Methansulfonat, Phosphat, Sulfat,

In einer besonders bevorzugten Ausführungsform bedeuten
- R¹: H,
- R: -(CH₂)₂-, -(CH₂)₃-,
- R³, R⁴: CH₃, CH₂CH₃
- R⁵: 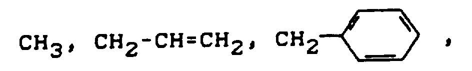 CH₂CH₂OH, CH₂CH₃,
- X^{⊖}: Cl^{⊖} , SO₄Me^{⊖}, SO₄Et^{⊖}.

Die Alkylhalogenide der Struktur II sind bisher nicht beschrieben worden. Daher sind auch Verbindungen der Struktur II Gegenstand der vorliegenden Erfindung. Die Substituenten außer Y haben darin dieselbe Bedeutung wie in der obigen Beschreibung der Struktur Ia. Dies gilt auch für die bevorzugten Substituenten. Y = Cl, Br.

Die Verbindungen der Struktur II sind nach üblichen, dem Fachmann bekannten Verfahren leicht zugänglich.

Ausgangsprodukte für Polysaccharide mit der Struktur (I) sind vorzugsweise Polyglykosane, wie Cellulose, die verschiedenen Derivate der Cellulose, wie Methylcellulose oder gemischte Celluloseether, wie Methylhydroxyethylcellulosen, Carboxymethylcellulosen, ihre verschiedenen Salze mit Natrium-, Kalium- oder Ammoniumionen; Stärke, Dextrine, Glycogen; Polyfuctosane, wie Inulin und Graminin; Polymannosane, Polygalactonsane, auch gemischte Polysaccharide, wie Hemicellulosen, ferner Polyxylosane oder Polyarabinosane.

Bevorzugte Ausgangsprodukte sind Cellulose und ihre Derivate, Stärke und Dextrine, besonders bevorzugt sind Cellulose, Methylcellulose, Ethylcellulose, Hydroxyethylcellulose, Hydroxypropylcellulose, Carboxymethylcellulose und deren Salze und Stärke.

Die Löslichkeit der erfindungsgemäßen Ammoniumpolysaccharide in Alkoholen oder Wasser hängt sowohl vom Ausgangsmaterial, vom Substitutionsgrad und vom Quarternisierungsgrad ab und kann nach Bedarf eingestellt werden.

Die Viskositätsstufen der Produkte lassen sich durch die Auswahl der Polysaccharide, die einen entsprechenden Durchschnittspolymerisationsgrad aufweisen einstellen. Niedrigviskose Produkte können durch Verwendung von nach üblichen Verfahren oxidativ oder hydrolytisch abgebauten Polysacchariden hergestellt werden.

Die Polysaccharide werden zur Veretherung alkalisiert. Die Alkalisierung der Polysaccharide und ihre nachfolgende Veretherung kann in Anwesenheit von organischen Lösemitteln durchgeführt werden. Geeignete organische Lösemittel sind niedere Alkohole, die vorzugsweise zwei bis vier Kohlenstoffatome pro Molekül enthalten, Ether mit vorzugsweise zwei bis vier Kohlenstoffatomen, Kohlenwasserstoffe sowie dipolaraprotische Lösemittel, wie z.B. Dimethylacetamid und Dimethylsulfoxid oder Mischungen dieser Lösemittel. Die Polysaccharide werden vorzugsweise zur Alkalisierung mit Natronlauge besprüht, wobei ihre Konzentration 18 bis 100 Gew.-%, vorzugsweise 40 bis 50 Gew.-% betragen soll. Die eingesetzte Menge an Natronlauge richtet sich nach dem erwünschten Quarternisierungsgrad. Erfindungsgemäß erfolgt die Zugabe des Veretherungsreagenz (II) vorzugsweise entweder vor der Natriumhydroxidzugabe oder nach der Alkalisierungsphase. Zur Veretherung wird das Reaktionsgemisch bis auf Temperaturen von 50 bis 100°C, vorzugsweise 70 bis 90°C, aufgeheizt und das eingestellte Temperaturniveau bis zur vollständigen Umsetzung beibehalten. Abhängig von den Temperaturen und des Lösemittels liegen die Veretherungszeiten zwischen 1 und 15 h.

Die Aufarbeitung erfolgt nach an sich bekannten Verfahren durch Abtrennen und Waschen mit wäßrigen, organischen Lösemitteln.

Die erfindungsgemäßen wasserlöslichen kationischen Polysaccharide sind geeignet als Zusatzmittel zu hygienischen und kosmetischen Reinigungs- und Pflegemitteln, als Hilfsmittel für die Papierfabrikation und zur Behandlung von Textilfasern zur Verbesserung des Griffs.

Weiter finden die wasserlöslichen kationischen Polysaccharide als Aggregationsmittel ihre Anwendung. Hierunter wird die Flockung, Koagulation und Ausfällung verstanden. Flockungsmittel sind Prozeßhilfsmittel zur rationellen Gestaltung von fest-flüssig-Trennprozessen. Mit ihrer Hilfe kann die Absetzgeschwindigkeit in Wasser suspendierter Festtoffe, die häufig in kolloidaler Form vorliegen, entscheidend erhöht werden. Wirksame Flockungsmittel erreichen eine nahezu vollständige Ausflockung der suspendierten Partikel, so daß die Restfeststoffgehalte in der flüssigen Phase weitgehend minimiert werden. Weiterhin wird durch den Einsatz von Flockungsmitteln der Feststoffgehalt der festen Phase erhöht, wodurch eine maschinelle Entwässerung der abgesetzten Schlämme technisch und ökonomisch günstig gestaltet werden kann.

Innerhalb der Flockungsmittel ist zwischen Primär-Flockungsmitteln und Flockungshilfsmitteln zu unterscheiden. Primär-Flockungsmittel sind chemische Verbindungen, die in Wasser schwerlösliche Niederschläge bilden. Dazu gehören die in der Praxis in großem Umfang eingesetzten Fe-, Al- und Ca-Salze. Ihr Zusatz bewirkt zunächst eine Ladungsneutralisation der meist durch negative Oberflächenladungen stabilisierten Suspensionsteilchen, wodurch die elektrische Doppelschicht der Partikel zerstört wird und eine rasche Koagulation eintritt. Bei fortschreitender Hydrolyse der anorganischen Verbindungen entstehen wasserdurchtränkte voluminöse Flocken, die Wasserinhaltsstoffe einschließen und ausfällen. Nachteilig bei der Flockung mit den preisgünstigen anorganischen Metallsalzen wirken sich die Temperaturabhängigkeit der Flockung, die Bindung an einem engen pH-Bereich, die relativ geringe Sedimentationsgeschwindigkeit der Flocken und die Bildung großer Schlammvolumina aus.

Flockungshilfsmittel sind kationische, anionische oder neutrale wasserlösliche Polymere hoher Molmasse, die diese Nachteile nicht aufweisen. Durch Ionen- und Dipolwechselwirkungen der Polymere mit den suspendierten Partikeln erfolgt auch hier zunächst eine Koagulation der Kolloidteilchen. Bei hinreichend hoher Molmasse sind die Makromoleküle in der Lage, mehrere der destabilisierten Partikel zu schnellsedimentierenden scherstabilen Makroflocken zu verbinden. Flockungshilfsmittel werden im großen Umfang in der Wasseraufbereitung und Abwasserbehandlung in der Erdöl-, Papier-, Kohle- und Erzindustrie sowie in einigen Zweigen der chemischen Industrie technisch genutzt.

Bei Einsatzmengen von 0,01 - 0,5 Gew.-% lassen sich die erfindungsgemäß hergestellten kationischen Polysaccharide vorteilhaft einsetzen. Je nach Kationisierungsgrad und Molmasse lassen sie sich für jedes Anwendungsgebiet maßschneidern.

In vielen Bereichen der Herstellung und Lagerung flüssiger und halbfester Produkte stellen Mikroorganismen durch ihre Vermehrungsfähigkeit und ihren Stoffwechsel ein Problem dar. So stehen z.Zt. Methoden zur Entfernung einmal gebildeter Mykotoxine unter gleichzeitiger Werterhaltung des Lebensmittels nicht zur Verfügung (H. K. Frank, Schriftenreihe des Bundes für Lebensmittelrecht und Lebensmittelkunde, Heft 76, 1974). Die erfindungsgemäß hergestellten wasserunlöslichen kationischen Polysaccharide finden Verwendung in der Herstellung von hochaktiven Filtermaterialien. Diese sind aus den oben genannten Gründen in der pharmazeutischen Industrie und in der Getränke-Industrie von hohem Interesse.

Die Wirkungsweise von Filterschichten beruht hauptsächlich auf
- mechanischer Siebwirkung,
- Tiefenwirkung,
- Adsorptionswirkung.

Aufgrund der mechanischen Siebwirkung werden grobe Trubteilchen an der Schichtoberfläche festgehalten. Sie dringen nicht in die Poren ein. Feinere Trubteilchen dringen tiefer in die Schicht ein, verfangen sich im Materialgeflecht und setzen nach und nach die Poren zu (Tiefenwirkung). Bedingt im wesentlichen durch die elektrischen Ladungsverhältnisse der Trubteilchen zu den Rohstoffen werden die Trubstoffe, die in die Schicht eingedrungen sind, an den Porenoberflächen adsorbiert (Adsorptionswirkung). Diese Wirkungen sind abhängig von den Materialeigenschaften der Rohstoffe (Kieselgur, Cellulose, Baumwolle). Die Leistungsfähigkeit einer Filterschicht wird durch die Klärschärfe definiert. Sie wird durch ein Zusammenspiel der Sieb-, Tiefen- und Adsorptionswirkung bestimmt.

Bei der Keimfiltration zeigen herkömmliche Filterschichten eine unzureichende Klärschärfe aufgrund einer mangelnden Adsorptionsfähigkeit.

Versuchsfilter, bei denen ein Teil des Rohstoffes Cellulose durch die erfindungsgemäßen kationischen Polysaccharide ersetzt wurde, zeigten bei der Keimfiltration eine verstärkte Wirksamkeit gegenüber pyrogenen und endotoxinen Keimen als Faserfilter oder Aluminiumoxid gefüllte Filterschichten.

### Beispiele

### Beispiel 1

Zu einer Lösung von 209 g (2,05 Mol) N,N-Dimethylaminopropylamin-1,3 in 300 g Isopropanol tropft man unter Rühren bei 0-5°C 226 g (2,0 Mol) Chloressigsäurechlorid möglichst rasch zu. Zu dieser Lösung tropft man bei 0-5°C in 30 Min. 252 g (2,0 Mol) Dimethylsulfat und anschließend bei 9-10°C in 1 Stunde 80 g Natriumhydroxid als 50%ige wäßrige Lösung. Danach wird langsam auf 50°C erwärmt und 3-5 Stunden bei dieser Temperatur gehalten. Das ausgefallene Salz wird abgesaugt, mit Isopropanol gewaschen und getrocknet: 112 g, d.s. 95 % der berechneten Menge.

Nach Eindampfen der vereinigten Filtrate erhält man ein hellbraunes Öl, 553 g, d.s. 97 % der berechneten Menge.

Die analytischen Werte entsprechen der angegebenen Struktur:

Cl-CH₂-CO-NH(CH₂)₃-N^{⊕}(CH₃)₃SO^{⊖} ₄CH₃ (III)

| Elementaranalyse: | C | N | Cl | S |
|---|---|---|---|---|
| ber. % | 35,5 | 9,2 | 11,9 | 10,5 |
| gef. % | 35,0 | 9,1 | 11,3 | 10,5 |

Molgewicht durch Dampfdruckosmose in DMF bestimmt: 320 (ber. 304).

### Beispiel 2

16,2 g (0,1 Mol) feingemahlene Baumwollinters werden in 300 ml Dioxan suspendiert und mit 18 %iger NaOH 1 h bei Raumtemperatur alkalisiert. Dann werden 30,5 g (0,1 Mol) des Quarternisierungsreagenzes III zur Alkalicellulose gegeben. Die Temperatur wird langsam auf 50°C erhöht und bei dieser 120 min gehalten. Nach dem Abkühlen wird mit Essigsäure neutralisiert, mit 70 %igem Methanol gereinigt und getrocknet. Man erhält einen wasserunlöslichen, kationisierten Celluloseether mit einem N-Gehalt von 2,5 %, entsprechend einem DS von 0,2, bezogen auf die kationisierte Gruppe. Das IR-Spektrum weist eine starke Amidbande bei 1.550 cm⁻¹ und 1.670 cm⁻¹ auf.

### Beispiel 3

27 g einer Hydroxyethylcellulose (HEC) mit einem molaren Substitutionsgrad von 2,4 werden in 300 ml DMSO/Toluol (1:1) suspendiert und mit 4,8 g NaOH (Prills) 1 h bei Raumtemperatur alkalisiert. Anschließend werden 30,5 g (0,1 Mol) des Quarternisierungsreagenzes III ins Reaktionsgefäß gegeben. Die Temperatur wird langsam auf 90°C erhöht und bei dieser 8 h gehalten. Nach dem Abkühlen wird mit Salpetersäure neutralisiert und mit 80 %igem Aceton gereinigt. Man erhält eine wasserlösliche, kationisierte HEC mit einem N-Gehalt von 4,6 %, entsprechend einem DS von 0,78. Die Chemikalienausbeute, bezogen auf das Veretherungsmittel, beträgt 78 %. Das IR-Spektrum weist wiederum die starken Amidbanden auf.

### Beispiel 4

18,9 g einer Methylhydroxyethylcellulose (MHEC) mit einem durchschnittlichen Substitutionsgrad, bezogen auf Methyl von 1,48 und einem molaren Substitutionsgrad, bezogen auf Hydroxyethyl, von 0,13 werden in 300 ml Dimethylacetamid/Cyclohexan (1:1) suspendiert und mit 4,8 g NaOH (Prills) 1 h bei Raumtemperatur alkalisiert. Anschließend werden 30,5 g (0,1 Mol) des Quarternisierungsreagenzes III ins Reaktionsgefäß gegeben. Die Temperatur wird langsam auf 70°C erhöht und bei dieser 8 h gehalten. Nach dem Abkühlen wird mit Salpetersäure neutralisiert und mit 80 %igem Aceton gereinigt. Man erhält eine wasserlösliche, kationisierte MHEC mit N-Gehalt von 3,4 %, entsprechend einem DS von 0,35, bezogen auf die quarternisierte Gruppe. Das IR-Spektrum weist wiederum die starken Amidbanden auf.

### Beispiel 5

23,3 g (0,1 Mol) einer Carboxymethylcellulose (CMC) mit einem durchschnittlichen Substitutionsgrad, bezogen auf die Carboxymethylgruppe, von 0,9 werden in 300 ml Dimethylsulfoxid suspendiert und mit 0,1 Mol 50 %iger NaOH 1 h bei Raumtemperatur alkalisiert. Anschließend werden 30,5 g (0,1 Mol) des Quarternisierungsreagenzes III zugegeben. Die Temperatur wird langsam auf 90°C erhöht und bei dieser 10 h gehalten. Nach dem Abkühlen wird mit Essigsäure neutralisiert, mit 70 %igem Methanol gewaschen und getrocknet. Man erhält eine kationisierte CMC mit einem N-Gehalt von 4,1 %, entsprechend einem DS von 0,55, bezogen auf die kationische Gruppe. Danach beträgt die Chemikalienausbeute 55 %. Das IR-Spektrum weist neben der Carboxylatbande bei 1.610 cm⁻¹ die Amidbanden bei 1.670 cm⁻¹ und 1.550 cm⁻¹ auf.

Vergleichsbeispiel (entsprechend DE-PS 3 820 031):
a) Veresterung der Carboxymethylcellulose
   Entsprechend dem Beispiel 1a) werden in einem 2-1-Laborautoklaven 228,4 g (1 Mol) Natriumcarboxymethylcellulose mit einem Modifizierungsgrad von 0,84, deren 2 %ige wäßrige Lösung eine Viskosität von 546 mPa.s (Rotationsviskosimeter) (pH-Wert 7,5) aufweist und 403,6 g Methylchlorid 9 h bei 80°C erhitzt. Hierbei bildet sich ein Druck von ca. 25 bar. Anschließend wird das Methylchlorid bei 50°C im Vakuum verdampft. Im IR-Spektrum des Reaktionsproduktes ist keine Carboxylatbande bei 1.610 cm⁻¹ mehr vorhanden. Statt dessen ist eine neue Bande bei 1.750 cm⁻¹ entstanden.
   Das Produkt ist wasserunlöslich, die überstehende Lösung weisen einen pH-Wert von 3,4 auf.
b) Aminolyse des CMC-Esters
   Entsprechend dem Beispiel 2b) werden in einem 2-1-Laborautoklaven 100 g des Reaktionsproduktes erhalten nach Abschnitt a), zusammen mit 80 g Dimethylaminopropylamin und 330 g Methanol unter Rühren 3 h auf 140°C erhitzt, nach dem Abkühlen abgenutscht und mit wäßrigem Methanol neutralgewaschen.
   Das IR-Spektrum des Reaktionsproduktes weist neben den erwarteten Amidbanden bei 1.550 cm⁻¹ und 1.670 cm⁻¹ eine gleichgroße Carboxylatbande bei 1.610 cm⁻¹ auf. Die Carbonylbande bei 1.750 cm⁻¹ ist verschwunden.
   Eine 2 %ige wäßrige Lösung des Aminolyseproduktes weist eine Viskosität, gemessen am Rotationsviskosimeter, von 16 mPa.s auf.
c) Quarternisierung des Aminolyseproduktes
   Entsprechend dem Beispiel 3a) werden 30 g des Reaktionsproduktes aus Abschnitt b) in einem 2-1-Laborautoklaven mit 50 g Methylchlorid und 480 ml Methanol 15 h bei Raumtemperatur gehalten. Nach dem Abkühlen wird das überschüssige Methylchlorid abgedampft, das Methanol abgenutscht und getrocknet.
   Das IR-Spektrum ist identisch mit dem Produkt aus Schritt b, es ist kein Cl⁻ nachweisbar.
   Unter diesen Reaktionsbedingungen findet keine Quarternisierung statt.
   Wird die Reaktion über 4 Stunden und bei 80°C durchgeführt, so erhält man ein wasserunlösliches Produkt. Die überstehende Lösung weist einen pH-Wert von 2,5 auf.
   Das IR-Spektrum weist folgende Banden auf:
   1750 cm⁻¹ (Hauptbande, -COOH, -COOMe)
   1670 cm⁻¹, 1550 cm⁻¹ (Amidbanden)
   1610 cm⁻¹ (-COO^{⊖} Na^{⊕})

## Patentansprüche

1. Verfahren zur Herstellung von Polysacchariden der wiederkehrenden Formel (I) 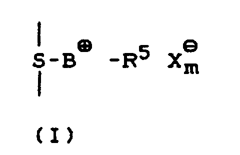 durch Umsetzung von Polysacchariden mit einem Alkylhalogenid der Struktur (II) 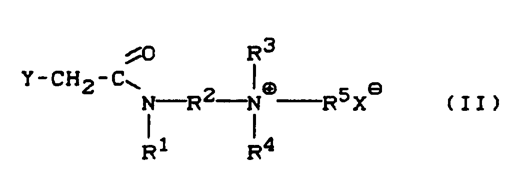 worin bedeuten
S eine Monosaccharideinheit und
B ein an den Monosaccharidrest S über ein O-Atom gebundener Rest der Formel (Ia) 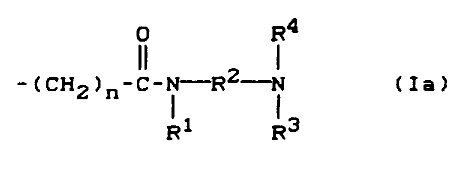
n = eine ganze Zahl von 1 bis 6,
R¹ = H, C₁₋₄-Alkyl,
R = ein Alkylenrest, der durch wenigstens ein O- oder N-Atom unterbrochen sein kann,
R³,R⁴ = ein Alkyl-, Aralkyl- oder Arylrest, ein Alkylrest, der durch wenigstens ein Heteroatom unterbrochen sein kann,
m = eine Zahl von 0,05 bis 3,0,
R⁵ = einen gegebenenfalls eine olefinische Doppelbindung oder ein O-Atom enthaltender Alkylrest oder ein Aralkylrest
Y = Cl, Br,
X^{⊖} = ein Anion
oder
R³ und R⁴ zusammen mit dem gemeinsamen N-Atom einen gegebenenfalls ein weiteres Heteroatom enthaltenen Ring.

2. Verfahren nach Anspruch 1, dadurch gekennzeichnet, daß bedeuten
R¹ = H, CH₃,
R = -CH₂CH₂-, -(CH₂)₃-, -(CH₂)₄-, -(CH₂)₆-, 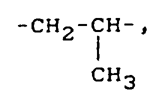 -(CH₂)₃-O-(CH₂)₂-, -(CH₂)₂-O-(CH₂)₂-,
R³ = CH₃, C₂H₅, C₃H₇, C₄H₉, 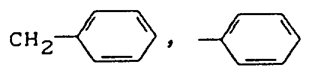
R⁴ = CH₃, CH₂CH₂OH, CH₂CH₃, CH₂CH₂OCH₃ oder
R³, R⁴ = mit dem N-Atom die Gruppe 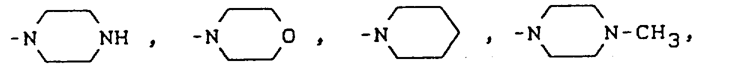
R⁵ = CH₃, CH₂CH₃, CH₂-CH=CH₂, 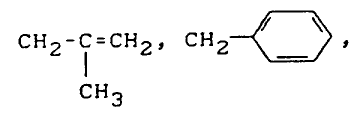 CH₂-CH₂OH
X^{⊖} = Cl^{⊖}, Br^{⊖}, SO₄Me^{⊖} , SO₄Et^{⊖} Toluolsulfonat, Methansulfonat, Phosphat, Sulfat.

3. Verfahren nach Anspruch 1, dadurch gekennzeichnet, daß bedeuten
R¹ = H,
R = -(CH₂)₂-, -(CH₂)₃-,
R³, R⁴ = CH₃, CH₂CH₃
R⁵ = 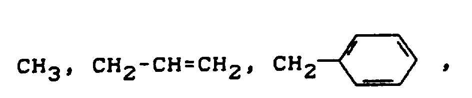 CH₂CH₂OH, CH₂CH₃,
X^{⊖} = Cl^{⊖}, SO₄Me^{⊖}, SO₄Et^{⊖}.

4. Verfahren zur Herstellung von Polysacchariden nach Anspruch 1, dadurch gekennzeichnet, daß ein alkalisiertes Polysaccharid verethert wird.

5. Verfahren zur Herstellung von Polysacchariden nach Anspruch 1, dadurch gekennzeichnet, daß S Cellulose oder ein Derivat davon ist.

6. Verfahren zur Herstellung von Polysacchariden nach Anspruch 1, dadurch gekennzeichnet, daß S Cellulose, Hydroxyethylcellulose, Hydroxypropylcellulose, Methylhydroxyethylcellulose oder Carboxymethylcellulose ist.

7. Verfahren zur Herstellung von Polysacchariden nach Anspruch 1, dadurch gekennzeichnet, daß der Stickstoffgehalt des Polysaccharids der Formel (I) wenigstens 0,3 Gew.-% beträgt.

## Claims

1. A process for the production of polysaccharides corresponding to formula (I): 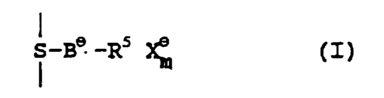 by reaction of polysaccharides with an alkyl halide corresponding to formula (II): 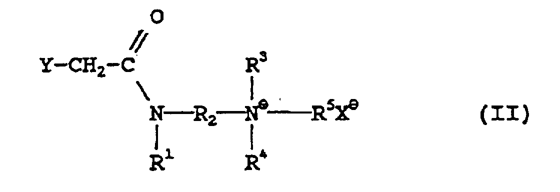 in which
S is a monosaccharide unit and
B is a group of formula (Ia) attached to the monosaccharide unit S by an O atom: 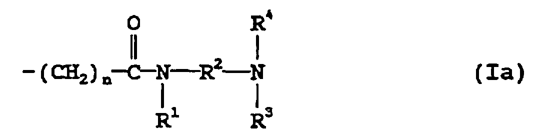
n = an integer of 1 to 6,
R¹ = H, C₁₋₄ alkyl,
R = an alkylene radical which may interrupted by at least one o or N atom,
R³,R⁴ = an alkyl, aralkyl or aryl radical, an alkyl radical which may be interrupted by at least one heteroatom,
m = a number of 0.05 to 3.0,
R⁵ = an alkyl radical optionally containing an olefinic double bond or an 0 atom or an aralkyl radical,
Y = Cl, Br,
X^{⊖} = an anion
or
R³ and R⁴ together with the common N atom form a ring optionally containing another heteroatom.

2. A process as claimed in claim 1, characterized in that
R¹ = H, CH₃
R = -CH₂CH₂-, -(CH₂)₃-, -(CH₂)₄-, -(CH₂)₆-, 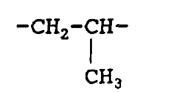 -(CH₂)₃-O-(CH₂)₂-, -(CH₂)₂-O-(CH₂)₂-,
R³ = CH₃, C₂H₅, C₃H₇, C₄H₉, 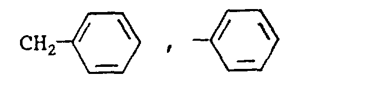
R⁴ = CH₃, CH₂CH₂OH, CH₂CH₃, CH₂CH₂OCH₃ or
R³, R⁴ together with N atom form the group 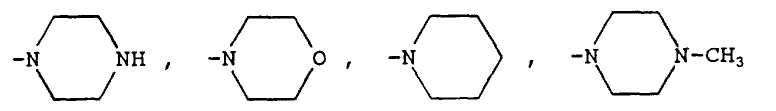
R⁵ = CH₃, CH₂CH₃, CH₂-CH=CH₂, 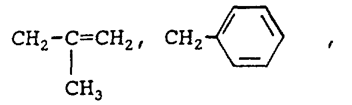 CH₂-CH₂OH
X^{⊖} = Cl^{⊖}, Br^{⊖}, SO₄Me^{⊖}, So₄Et^{⊖} toluene sulfonate, methane sulfonate, phosphate, sulfate.

3. A process as claimed in claim 1, characterized in that
R¹ = H,
R = -(CH₂)₂-, -(CH₂)₃-,
R³,R⁴ = CH₃, CH₂CH₃
R⁵ = CH₃, CH₂-CH=CH₂, 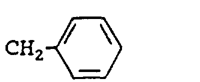 CH₂CH₂OH, CH₂CH₃,
X^{⊖} = Cl^{⊖}, SO₄Me^{⊖}, SO₄Et^{⊖}.

4. A process as claimed in claim 1 for the production of polysaccharides, characterized in that an alkalized polysaccharide is etherified.

5. A process as claimed in claim 1 for the production of polysaccharides, characterized in that S is cellulose or a cellulose derivative.

6. A process as claimed in claim 1 for the production of polysaccharides, characterized in that S is cellulose, hydroxyethyl cellulose, hydroxypropyl cellulose, methyl hydroxyethyl cellulose or carboxymethyl cellulose.

7. A process as claimed in claim 1 for the production of polysaccharides, characterized in that the polysaccharide corresponding to formula (I) has a nitrogen content of at least 0.3% by weight.

## Revendications

1. Procédé de préparation de polysaccharides de formule récurrente (I) 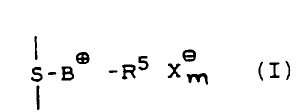 par transformation de polysaccharides au moyen d'un halogénure d'alkyle de structure (II) 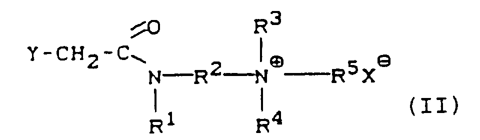 dans laquelle
S désigne une unité de monosaccharide et
B désigne un radical de formule (1a), lié au radical monosaccharidespar un atome O 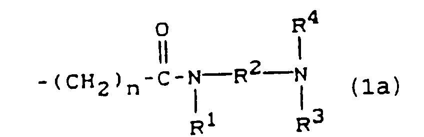
n désigne un nombre entier de 1 à 6
R¹ désigne 1'H, un radical alkyle C₁₋₄
R désigne un radical alkylène pouvant être interrompu par au moins un atome O ou N
R³, R⁴ désigne le radical alkyle, aralkyle ou aryle, le radical alkyle pouvant être interrompu par au moins un hétéro-atome
m désigne un nombre de 0,05 à 3,0
R⁵ désigne un radical alkyle ou aralkyle contenant éventuellement une double liaison oléfinique ou un atome O
Y désigne le Cl, le Br
X_{⊖} désigne un anion
ou
R³ et R⁴ désignent avec l'atome N commun un cycle contenant éventuellement un autre hétéro-atome.

2. Procédé selon la revendication 1, caractérisé en ce que les symboles sont les suivants:
R¹ désigne H, CH₃
R désigne -CH₂CH₂-, -(CH₂)₃-, -(CH₂)₄-, -(CH₂)₆-, 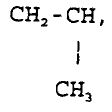 -(CH₂)₃-O-(CH₂)₂-, -(CH₂)₂-O-(CH₂)₂-,
R³ désigne CH₃, C₂H₅, C₃H₇, C₄H₉, 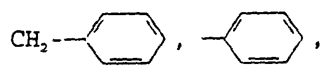
R⁴ désigne CH₃, CH₂CH₂OH, CH₂CH₃, CH₂-CH₂-O-CH₃ ou
R³, R⁴ désignent avec l'atome N le groupe 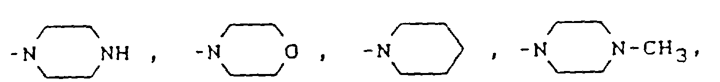
R⁵ désigne CH₃, CH₂CH₃, CH₂-CH=CH₂, 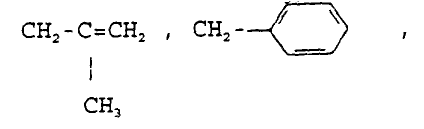 CH₂-CH₂OH
xθ désigne Cl_{⊕} Br_{⊕} SO₄Me_{⊕} SO₄Et_{⊖} Toluène-sulfonate, méthane-sulfonate, phosphate, sulfate.

3. Procédé selon la revendication 1, caractérisé en ce que
R¹ désigne l'H,
R désigne -(CH₂)₂-, -(CH₂)₃-,
R³, R⁴ désignent CH₃, CH₂CH₃
R⁵ désigne CH₃, CH₂-CH=CH₂, 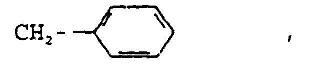 CH₂CH₂OH, CH₂CH₃,
x_{⊖} désigne Cl_{⊕} SO₄Me_{⊕} SO₄Et_{⊖}

4. Procédé de préparation de polysaccharides selon la revendication 1, caractérisé en ce que l'on opère l'éthérification d'un polysaccharide alcalinisé.

5. Procédé de préparation de polysaccharides selon la revendication 1, caractérisé en ce que S est de la cellulose ou l'un de ses dérivés.

6. Procédé de préparation de polysaccharides selon la revendication 1, caractérisé en ce que S est de la cellulose, de l'hydroxyéthylcellulose, de l'hydroxypropylcellulose, de la méthylhydroxyéthylcellulose ou de la carboxyméthylcellulose.

7. Procédé de préparation de polysaccharides selon la revendication 1, caractérisé en ce que la teneur en azote du polysaccharide de formule (I) est de 0,3 % en poids au moins.
